# EUROPÄISCHE PATENTSCHRIFT

(11) **EP 1 932 710 B1**
(45) Veröffentlichungstag und Bekanntmachung des Hinweises auf die Patenterteilung: **11.08.2010**
(21) Anmeldenummer: 08004594.1
(22) Anmeldetag: 11.04.2006
(51) Int. Cl.: B60K 35/00, B60K 37/02, G06F 3/033, G02B 27/22

(54) **Kraftfahrzeug mit einem Kombiinstrument zur Darstellung von Informationen**
Motor vehicle with a combination instrument for displaying information
Véhicule automobile à instrument combiné pour afficher des informations

(30) Priorität: 14.04.2005 DE 102005017313
(43) Veröffentlichungstag der Anmeldung: 18.06.2008
(62) Teilanmeldung aus: 06724251.1
(73) Patentinhaber: VOLKSWAGEN AG, 38436 Wolfsburg (DE)
(72) Erfinder: Wengelnik, Heino, 38442 Wolfsburg (DE); Specks, Will, 38440 Wolfsburg (DE); Dehmann, Rainer, 10963 Berlin (DE); Bartoszewski, Heiner, 38547 Calberlah (DE); Kuhn, Mathias, 14109 Berlin (DE)
(74) Vertreter: Rabe, Andreas

(56) Entgegenhaltungen:
- DE-A1- 10 003 326
- DE-A1- 10 224 016
- GB-A- 2 405 546

## Beschreibung

Die vorliegende Erfindung betrifft ein Kraftfahrzeug mit einem Kombiinstrument zur Darstellung von Informationen nahe des primären Sichtfeldes des Fahrers, umfassend eine Anzeigeeinheit mit einem Display und einer Steuereinheit zum Steuern des Displays, wobei vor dem Display eine Maske angeordnet ist, welche die Lichtemission des von dem Display abgestrahlten Lichts so verändert, dass autostereoskopische Bilder darstellbar sind.

In einem Kraftfahrzeug gibt es verschiedene Informations- und Kommunikationsbereiche, denen Anzeigeinstrumente zugeordnet sind. Sie dienen der Information des Fahrers und der Mitfahrer. Ferner können sie den Fahrer bei der Navigation oder der Kommunikation mit der Außenwelt unterstützen. Die Anzeige kann insbesondere verkehrs- oder betriebsbezogene Daten des Fahrzeugs visuell darstellen. In der Nähe des primären Sichtfelds des Fahrers ist das sog. Kombiinstrument angeordnet. Üblicherweise befindet es sich im Cockpit hinter dem Lenkrad, wobei es durch eine Öffnung des Lenkrads sichtbar ist. Es dient insbesondere der Anzeige der Geschwindigkeit, des Tankinhalts, der Kühlertemperatur und anderer betriebsbezogener Informationen des Kraftfahrzeugs. Ferner können Radio- und Audiofunktionen dargestellt werden. Schließlich können Menüs für Telefon, Navigation, Telematikdienste und Multimediaanwendungen angezeigt werden. Als Display werden üblicherweise Flüssigkristallanzeigen in verschiedenen Ausführungen verwendet.

In der DE 100 01 988 A1 ist beispielsweise ein Kombiinstrument zur Anzeige von betriebs- und/oder verkehrsbezogenen Daten beschrieben. Um das vielfältige Informationsangebot besser aufnehmen zu können, wird in der DE 103 03 792 A1 eine perspektivische Darstellung dreidimensionaler Elemente vorgeschlagen.

Als weitere Anzeigeeinrichtung besitzt ein Fahrzeug häufig eine Multifunktionsanzeige in der Mittelkonsole oder oberhalb der Mittelkonsole. Ein solches Multifunktionsbedienelement ist beispielsweise in der DE 199 41 955 A1 beschrieben.

Um die vielfältigen Bedien- und Anzeigemöglichkeiten übersichtlich darzustellen, werden häufig hierarchische Menüstrukturen verwendet. Ein Menü zeigt verschiedene Menüpunkte und gegebenenfalls den Menüpunkten zugeordnete Grafiken oder Icons an. Bei der Auswahl eines Menüpunkts öffnet sich ein Untermenü mit weiteren Untermenüpunkten. Diese Struktur kann über mehrere Hierarchieebenen fortgeführt werden. Außerdem kann einem Menüpunkt anstatt eines Untermenüs ein bestimmtes Anzeigebild zugeordnet sein, welches die dem Menüpunkt zugeordnete Information darstellt.

Werden solche Menüstrukturen in einem Verkehrsmittel insbesondere in einem Kraftfahrzeug eingesetzt, soll die Aufmerksamkeit des Fahrers durch das Erfassen der dargestellten Information und durch die Bedienung der Anzeigevorrichtung nicht beeinträchtigt werden. Die Informationsdarstellung soll daher so intuitiv wie möglich erscheinen. Dabei sind dreidimensionale Darstellungen von Objekten bevorzugt gegenüber zweidimensionalen Projektionen dreidimensionaler Objekte.

Es sind verschiedene Technologien entwickelt worden dreidimensionale Darstellungen in Anzeigeinstrumenten zu realisieren. In den folgenden Druckschriften sind holographische Anzeigevorrichtungen für Kraftfahrzeuge beschrieben: DE 37 40 557 A1, DE 197 04 740 A1, GB 2 212 964 A, EP 0 891 887 B1. Nachteilhaft an holographischen Anzeigevorrichtungen ist jedoch, dass der Aufbau der Anzeigevorrichtungen sehr aufwändig und die dreidimensionale Darstellung nicht sehr wirklichkeitsnah ist.

Aus der DE 102 24 016 A1, die auch die Merkmale des Oberbegriffs des Anspruchs 1 beinhaltet, sind schließlich sog. autostereoskopische Projektionsvorrichtungen für Kraftfahrzeuge bekannt. Im Unterschied zu perspektivischen zweidimensionalen Darstellungen sieht das eine Auge ein geringfügig anderes Bild als das andere Auge. Hierdurch wird eine reale dreidimensionale Darstellung erreicht. Bei einer autostereoskopischen Anzeige sind keine speziellen Vorrichtungen, wie beispielsweise Brillen oder dgl., nötig, um den dreidimensionalen Effekt beim Betrachten der Anzeige hervorzurufen.

In der DE 102 25 385 A1 ist eine stereoskopische Anzeigevorrichtung für ein Fahrzeug beschrieben. Die Vorrichtung umfasst eine erste Anzeige, die dem Fahrer reale Bilder anzeigt. Ferner enthält die Vorrichtung einen Halbspiegel, der vor der ersten Anzeige angeordnet ist. Über einen Totalreflektionsspiegel werden von einer zweiten Anzeige erzeugte Bilder auf dem Halbspiegel dargestellt. Sie erscheinen dort als virtuelle Bilder. Die Anordnung wird dabei so gewählt, dass im Ergebnis ein virtuelles Bild an einer Position angezeigt wird, die von der Position eines an der ersten Anzeige angezeigten realen Bildes in der Tiefenrichtung entfernt derart angezeigt ist, dass durch das reale Bild und das virtuelle Bild ein dreidimensionales stereoskopisches Bild angezeigt werden kann. Nachteilhaft an dieser Vorrichtung ist jedoch, dass sie relativ viel Bauraum benötigt. Des Weiteren ist in der DE 37 12 170 A1 ein stereoskopisches Displaysystem beschrieben, bei welchem über eine Abbildungsoptik Bilder in die Windschutzscheibe des Kraftfahrzeugs projiziert werden. Hierdurch wird eine sog. Head-up-Anzeige realisiert. Auch dieses System erfordert relativ viel Bauraum und ist außerdem für die Anzeige in einem Kombiinstrument nicht geeignet.

Es ist die Aufgabe der vorliegenden Erfindung, ein Kraftfahrzeug mit einem Kombiinstrument der eingangs genannten Art bereitzustellen, bei dem das Kombiinstrument einfach und intuitiv bedient werden kann.

Erfindungsgemäß wird diese Aufgabe durch ein Kraftfahrzeug mit den Merkmalen des Anspruchs 1 gelöst. Vorteilhafte Aus- und Weiterbildungen ergeben sich aus den Unteransprüchen.

Das erfindungsgemäße Kraftfahrzeug mit dem Kombiinstrument ist **dadurch gekennzeichnet, dass** das Kraftfahrzeug eine mit der Steuereinheit verbundene dreidimensional betätigbare Bedieneinrichtung umfasst und die Steuereinheit die Anzeigeeinheit so steuert, dass die dreidimensionale Betätigung der Bedieneinrichtung autostereoskopisch wiedergegeben wird.

Die Ausgestaltung des Kombiinstruments in einem Kraftfahrzeug mit einem autostereoskopischen Display bietet einerseits den Vorteil, dass die Information des Kombiinstruments frei programmierbar in vielfältiger Weise und insbesondere aufgrund der dreidimensionalen Darstellung sehr einfach für den Betrachter erfassbar dargestellt werden kann. Zudem ist der Bauraumbedarf eines solchen Kombiinstruments wesentlich geringer als derjenige eines herkömmlichen Kombiinstruments. Für die autostereoskopische Darstellung kann nämlich ein an sich bekanntes flaches Display mit einer Maske für die Trennung verschiedener Bilder verwendet werden. Diese Maske benötigt praktisch keinen Bauraum. Die Steuereinheit, welche die Daten erzeugt, die für eine autostereoskopische Darstellung geeignet sind, benötigt genauso viel Bauraum wie ein herkömmliches Steuergerät. Somit können durch das erfindungsgemäße Kombiinstrument eine Vielzahl von Informationen angezeigt werden, die bei mechanischen Rundinstrumenten oder dgl. sehr viel Bauraum benötigen würden. Auch im Kraftfahrzeugbereich bekannte stereoskopische Anzeigen benötigen sehr viel mehr Bauraum.

Die Maske ist beispielsweise eine wellenlängenselektive Filtermaske. Dieser Filter gibt die Lichtausbreitungsrichtungen der einzelnen Subpixel des Displays durch Abdecken bzw. Filtern vor. Einzelne Farbwerte der Pixel werden in verschiedenen Winkeln in den Raum abgestrahlt. Auf diese Weise lassen sich für die beiden Augen des Betrachters separate Bilder erzeugen, die beim Betrachter zu einem dreidimensionalen Bild zusammengesetzt werden. Dabei zeigt das Bild für das eine Auge eine leicht versetzte Betrachtungsposition relativ zu dem Bild, das für das andere Auge bestimmt ist.

Das Display kann beispielsweise ein Flachbildschirm, insbesondere ein TFT-LCD- oder Plasma-Display sein. Auf diesem Display kann eine optische Strukturmaske angebracht sein, welche die Trennung von Teilbildern für eine autostereoskopische Darstellung ermöglicht.

Das Kombiinstrument des Kraftfahrzeugs kann unterhalb der Windschutzscheibe, insbesondere hinter dem Lenkrad angeordnet sein.

Durch die dreidimensionale Darstellung können auch Bedienelemente stereoskopisch dargestellt werden. Auf diese Weise kann ein ganzes Cockpit virtuell auf einem Display realisiert werden, wobei die realen dreidimensionalen Elemente virtuelle dreidimensionale Entsprechungen finden.

Des Weiteren können hierarchische Menüstrukturen in einem Zwiebelmodell dargestellt werden, bei dem Menüs oder Objekte um das aktuelle Menü bzw. Objekt herum positioniert werden.

Für die Navigation in den Menüstrukturen kann bei dem erfindungsgemäßen Verfahren eine räumliche Maus realisiert werden, die entweder frei im Raum bewegbar ist oder nur eine Tiefenbewegung in Blickrichtung des Betrachters erlaubt.

Die Auswahl von Menüpunkten kann durch Gesten erfolgen. Die Gesten können beispielsweise durch Infrarotsensoren erfasst werden und in die Menüsteuerung umgesetzt werden. Eine derartige Steuerung ist insbesondere in Verkehrsmitteln vorteilhaft, da in diesem Fall nicht genau eine Taste oder dgl. getroffen werden muss. Es reicht beispielsweise eine Geste zum Umblättern eines Buchs aus, um die Anzeige eines neuen Menüs zu erhalten.

Gemäß einer anderen Ausgestaltung kann die Auswahl von Menüpunkten durch Berührung eines Displays für die stereoskopische Darstellung erfolgen. Dabei kann die Auswahl durch Berührung des Displays bei einer virtuellen stereoskopisch dargestellten Taste erfolgen, wobei nach der Berührung die Taste vom Betrachter weg versetzt dargestellt wird. Das Drücken einer realen Taste findet auf diese Weise seine Entsprechung in der dreidimensionalen Darstellung auf dem Display.

Wird Information auf einer senkrecht zur Blickrichtung eines Betrachters ausgerichteten Fläche dargestellt, kann die zu dieser Information gehörige Detailinformation auf der Rückseite dieser Fläche dargestellt sein, wobei die Rückseite für den Betrachter durch eine stereoskopische Drehung der Fläche um 180° sichtbar wird.

Wird Information dargestellt, die einen Teil des Verkehrsmittels betrifft, wandert die stereoskopische Repräsentation dieses Teils bei einer Ausbildung des erfindungsgemäßen Verfahrens aus der Richtung des körperlichen Teils im Verkehrsmittel ins Blickfeld des Betrachters. Auf diese Weise kann der Betrachter sehr leicht erfassen, welches Teil dargestellt ist.

Gemäß einer weiteren bevorzugten Weiterbildung des Verfahrens werden die dreidimensionalen Bewegungen einer Bedieneinrichtung mittels der stereoskopischen Darstellung dreidimensional wiedergegeben. Es erfolgt somit eine optische Rückmeldung tatsächlich ausgeführter dreidimensionaler Bewegungen im dreidimensionalen Raum. Hierdurch wird die Betätigung der Bedieneinrichtung erleichtert.

Vorzugsweise umfasst ein Menü eine stereoskopische Darstellung des Innenraums des Verkehrsmittels, bei der Licht-, Audio- und/oder Klimaquellen im Innenraum dargestellt sind. Auf diese Weise lassen sich besonders einfach die vielfältigen Licht-, Audio- und/oder Klimaquellen im Verkehrsmittel steuern.

Des Weiteren kann ein Menü die stereoskopische Darstellung eines Kompass umfassen. Der Kompass umfasst vorzugsweise eine stereoskopisch dargestellte Scheibe, die schräg von oben betrachtet wird. Hierdurch wird die Ablesbarkeit des Kompass wesentlich verbessert, da eine Zuordnung des Kompass in der Fahrumgebung erleichtert wird.

Alle dreidimensionalen Darstellungen des erfindungsgemäßen Kraftfahrzeugs erfolgen autostereoskopisch. Dies bedeutet, dass für den dreidimensionalen Eindruck der Darstellung keine zusätzlichen Hilfsmittel, wie beispielsweise eine Brille, erforderlich sind. Dies ist bei einem Einsatz in einem Kraftfahrzeug besonders wichtig, da der Betrachter ständig zwischen dem Blick in die reale Fahrumgebung und einem Blick auf die dreidimensional dargestellte Information wechselt.

Gemäß einer Ausgestaltung des erfindungsgemäßen Kraftfahrzeugs ist ein Spiegel vorgesehen, der so angeordnet ist, dass er die stereoskopische Anzeige der Anzeigeeinheit zu einem Betrachter hinspiegelt. Der Spiegel kann halbdurchlässig sein und zwischen dem Fahrer und weiteren Anzeigeinstrumenten angeordnet sein. In diesem Fall kann die dreidimensionale Anzeige vor einem herkömmlichen Kombiinstrument erscheinen und dieses gegebenenfalls ergänzen. Die Anzeigeeinheit kann dabei oberhalb oder unterhalb des Spiegels angeordnet sein. Die Anzeigeeinheit kann außerdem so angeordnet sein, dass ihre Anzeige über die Windschutzscheibe zum Betrachter gespiegelt wird. Die Windschutzscheibe wirkt in diesem Fall als halbdurchlässiger Spiegel. Zwischen der Anzeigeeinheit und der Windschutzscheibe kann auch eine Optik zur Verlängerung des optischen Weges angeordnet sein. In diesem Fall kann ein sog. Head-up-Display realisiert werden.

Es hat sich herausgestellt, dass die Auflösung des Displays bei der Verwendung in dem erfindungsgemäßen Kombiinstrument in horizontaler Richtung vorzugsweise größer als 150 dpi (dots per inch) ist. Ein Bildpunkt umfasst in diesem Fall die drei Farben RGB.

Gemäß einer bevorzugten Weiterbildung des Kombiinstruments des erfindungsgemäßen Kraftfahrzeugs steuert die Steuereinheit das Display für die Darstellung eines Anzeigebildes so, dass mindestens acht autostereoskopische Ansichten gleichzeitig darstellbar sind, wobei die Ansichten in einen horizontalen Sichtfächer abstrahlbar sind. Es können vorzugsweise mehrere stereoskopische Sichtfächer nebeneinander erzeugt werden und eine Sichtzone bilden. Bevorzugt sind in dem Sichtfächer insgesamt sechs bis acht nebeneinander liegende autostereoskopische Ansichten enthalten. Der horizontale Öffnungswinkel des Sichtfächers oder der Sichtfächer, in dem eine autostereoskopische Darstellung erfolgt, ist vorzugsweise größer 15° und insbesondere zwischen 25 und 30°. Besonders bevorzugt ist ein Öffnungswinkel von 27°. Auf diese Weise können für den Betrachter mehrere Ansichten bei verschiedenen Betrachtungswinkeln erzeugt werden, bei denen jeweils korrekt Bildpaare für die Zusammensetzung zu einem dreidimensionalen Bild bei den jeweiligen Winkeln abgestrahlt werden. Dies hat zur Folge, dass man nahe am Display zwei Ansichten sieht die weiter voneinander entfernt sind. Geht man weiter weg, dann verbreitern sich auch die Teilansichten und die Augen sehen näher benachbarte Ansichten. Die Zahl der Ansichten hängt von der Größe des Displays ab. Bei kleineren Displays, deren Diagonale 4 Zoll ist, haben sich insbesondere acht Ansichten als günstig erwiesen. Bei größeren Displays mit beispielsweise 50 Zoll Durchmesser sind auch 16 oder 24 Ansichten möglich.

Gemäß einer anderen Ausgestaltung des Kombiinstruments des erfindungsgemäßen Kraftfahrzeugs ist eine mit der Steuereinheit verbundene Einrichtung zum Verfolgen der Augenposition vorgesehen, wobei die Maske in einer zu dem Display parallelen Ebene verschiebbar ist und wobei das Verschieben der Maske in Abhängigkeit von dem Signal der Einrichtung zum Verfolgen der Augenposition erfolgt. In diesem Fall reicht es aus, nur zwei Ansichten für die beiden Augen darzustellen. Der richtige Abstrahlwinkel wird dann durch die Regelung der Maskenposition in Abhängigkeit von der Augenposition erreicht.

Das Display weist vorzugsweise einen Bereich zur Darstellung der Geschwindigkeit und/oder der Motordrehzahl in Form eines Rundinstruments auf. Ferner kann es Bereiche zur Darstellung der Kühlertemperatur und/oder des Füllstands des Tanks aufweisen. Auch alle weiteren Anzeigefunktionen eines herkömmlichen Kombiinstruments können von dem autostereoskopischen Display realisiert werden.

Schließlich umfasst das Display vorzugsweise einen Bereich zur stereoskopischen Darstellung eines Kompass, bei der eine Kompassscheibe von schräg oben betrachtet wird.

Die Erfindung wird nun anhand von Ausführungsbeispielen mit Bezug zu den Zeichnungen erläutert.
Fig. 1 zeigt schematisch den allgemeinen Aufbau eines Ausführungsbeispiels der erfindungsgemäßen Vorrichtung,
Fig. 2 zeigt schematisch den Aufbau des Displays,
Fig. 3 zeigt ein Ausführungsbeispiel des Kombiinstruments, das in ein erfindungsgemäßen Kraftfahrzeug eingebaut ist,
Fig. 4 zeigt schematisch die Lichtemission des Displays gemäß einem Ausführungsbeispiel,
Fig. 5 zeigt eine von acht Ansichten für die stereoskopische Darstellung eines Menüs,
Fig. 6 zeigt die Lichtemission des Displays gemäß einem anderen Ausführungsbeispiel,
Fig. 7 zeigt ein weiteres Ausführungsbeispiel der erfindungsgemäßen Vorrichtung,
Fig. 8 zeigt noch ein weiteres Ausführungsbeispiel der erfindungsgemäßen Vorrichtung,
Fig. 9 zeigt noch ein weiteres Ausführungsbeispiel, bei dem ein Head-up-Display realisiert wird,
Fig. 10 zeigt ein weiteres Ausführungsbeispiel, bei welchem Informationen in der Mittelkonsole eines Fahrzeugs darstellt werden,
Fig. 11 zeigt ein weiteres Ausführungsbeispiel, das dem in Fig. 10 gezeigten Ausführungsbeispiel entspricht, bei dem jedoch eine andere Art der Informationsdarstellung gewählt wurde, und
Fig. 12 zeigt eine Kompassdarstellung nach einem Ausführungsbeispiel des erfindungsgemäßen Verfahrens.

Es wird darauf hingewiesen, dass die zweidimensionalen Darstellungen der beigefügten Zeichnungen bei den Ausführungsbeispielen der Erfindung dreidimensional autostereoskopisch dargestellt werden. Elemente der Darstellungen werden somit dreidimensional vor und hinter der Displayebene dargestellt, wobei es für den Betrachter möglich ist, durch eine Änderung des Betrachtungswinkels die dreidimensional dargestellten Objekte auch in einem begrenzten Winkelbereich von der Seite bzw. von oben oder unten zu betrachten.

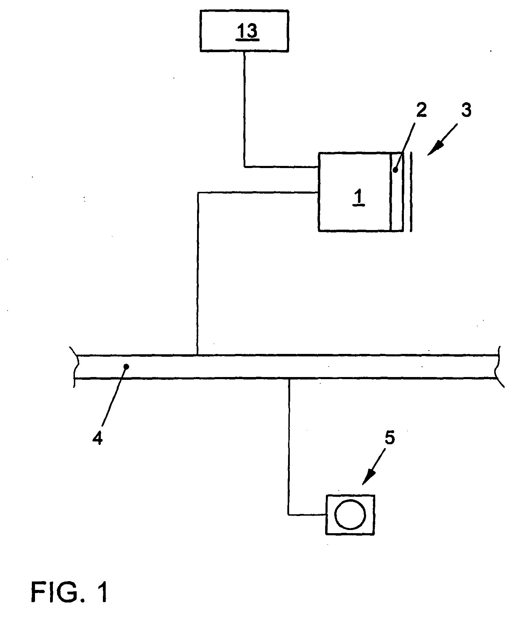

Mit Bezug zu Fig. 1 wird der grundsätzliche Aufbau einer Vorrichtung zur Darstellung von Informationen erläutert. Die Vorrichtung wird in einem Verkehrsmittel insbesondere in einem Kraftfahrzeug eingesetzt.

Als zentrale Einheit weist die Vorrichtung eine Steuereinheit 1 auf. Sie steuert die Darstellung von Bildern, die von der mit der Steuereinheit 1 verbundenen Anzeigeeinheit 2 dargestellt werden. Die Anzeigeeinheit 2 umfasst ein Display zur autostereoskopen dreidimensionalen Darstellung von Bildern. Um die autostereoskopische Wirkung zu erzielen ist vor dem Display eine Maske 3 angeordnet, welche die Lichtemission des von dem Display abgestrahlten Lichts so verändert, dass autostereoskopische Bilder darstellbar sind. Details zu der Anzeigeeinheit werden später erläutert.

Die Steuereinheit ist mit einem Fahrzeugbus 4 verbunden. Ferner ist eine Bedieneinrichtung 5 mit dem Fahrzeugbus 4 verbunden. Die Bedieneinrichtung 5 umfasst ein dreidimensional betätigbares Bedienelement, mit welchem sich verschiedenste Funktionen, die in dem Kraftfahrzeug ausführbar sind, steuerbar sind. Die diesen Funktionen zugeordneten Anzeigen werden von der Anzeigeeinheit 2 dargestellt. Hierfür empfängt die Steuereinheit die Signale der Bedieneinrichtung 5 über den Fahrzeugbus 4. Die diesen Eingangssignalen zugeordneten Anzeigebilder lädt die Steuereinheit 1 aus einem Speicher 13. Die Anzeigedaten für die autostereoskopische Darstellung der Bilder werden dann von der Steuereinheit 1 an die Anzeigeeinheit 2 übertragen, bei der sie auf dem Display dargestellt werden. Die Funktionen, die von der Bedieneinrichtung 5 ausführbar sind und welche entsprechend von der Anzeigeeinheit 2 angezeigt werden, umfassen alle Funktionen, die bisher und die ggf. in Zukunft von herkömmlichen zweidimensionalen Anzeigeeinrichtungen eines Kraftfahrzeugs oder eines anderen Verkehrsmittels angezeigt werden. Die Besonderheiten der vorliegenden Erfindung liegen in der Ansteuerung der Anzeigeeinheit 2 und der Darstellung der Anzeigebilder sowie in der Darstellung von hierarchischen Menüstrukturen.

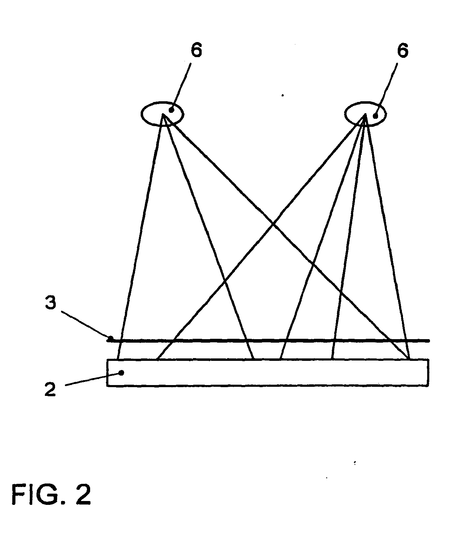

Fig. 2 zeigt die Anzeigeeinheit 2, vor der die Maske 3 angeordnet ist. Schematisch sind auch die Augen 6 eines Betrachters dargestellt. Das Display der Anzeigeeinheit 2 ist ein herkömmliches TFT-LCD- oder ein Plasma-Display mit einer Vielzahl von Bildpunkten, wobei jeder Bildpunkt die drei Farben Rot, Gelb, Blau darstellen kann. Bei der Maske 3 handelt es sich insbesondere um eine wellenlängenselektive Filtermaske bzw. eine optische Strukturmaske. Die Maske ermöglicht es, dass zwischen Teilbildern, die zu verschiedenen Ansichten gehören, zu unterscheiden und jede Ansicht in eine andere Richtung abzustrahlen. Es können somit Teilbilder für das rechte und für das linke Auge getrennt werden. Beim Betrachten der Anzeigeeinheit 2 können die Teilbilder zu einer dreidimensionalen Ansicht zusammengesetzt werden. Hierfür sind keine weiteren Hilfsmittel, wie Brillen oder dgl., erforderlich. Hinsichtlich weiterer Details der Anzeigeeinheit 2 wird auf die DE 103 09 194 A1 und die DE 103 20 530 A1 verwiesen.

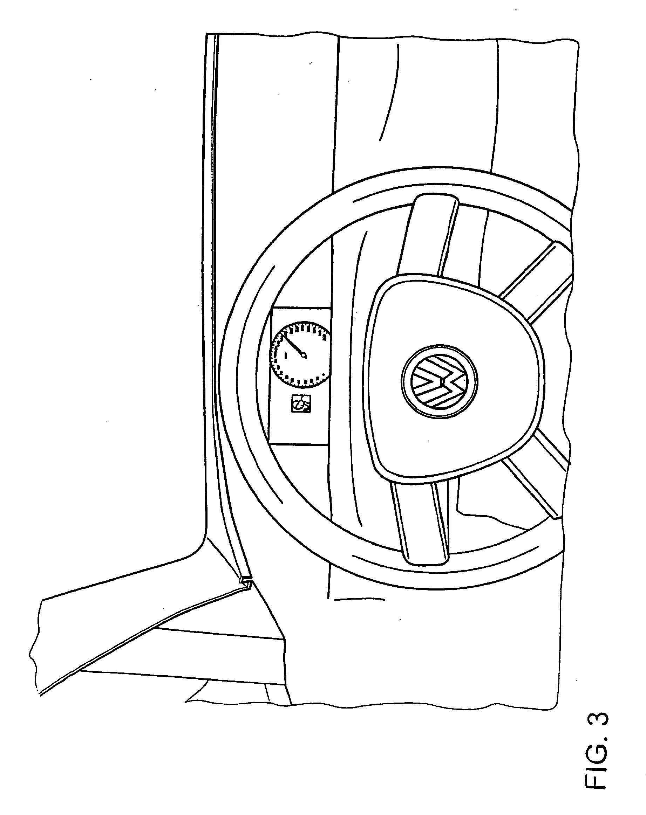

Fig. 3 zeigt ein Kombiinstrument in einem Kraftfahrzeug, bei welchem die Rundinstrumente, Menüs und andere Anzeigen von der Anzeigeeinheit 2 stereoskopisch dargestellt werden. Das Kombiinstrument ist an dem üblichen Ort hinter dem Lenkrad im Cockpit eines Kraftfahrzeugs untergebracht.

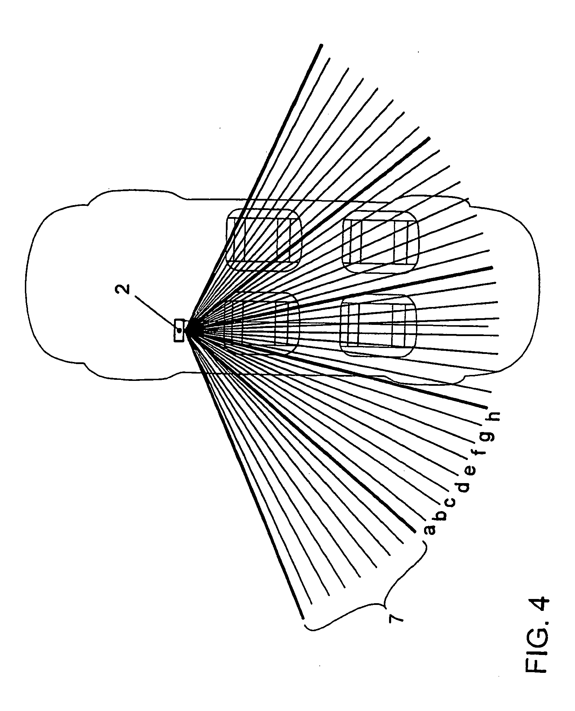

In Fig. 4 ist dargestellt, wie ein dreidimensionales Anzeigebild von der Anzeigeeinheit 2 abgestrahlt wird.

Das dreidimensionale Bild wird von einem Bildpaar erzeugt, von dem das rechte Auge eine Ansicht und das linke Auge eine andere Ansicht sieht. Die Trennung dieser Teilbilder erfolgt, wie beschrieben, über die Struktur- bzw. Filtermaske 3. Diese Bildtrennung ist jedoch nur in einem bestimmten Raumwinkel möglich. Bewegt der Betrachter sich beispielsweise in einer horizontalen Ebene zur Seite, wird die Trennung der Teilbilder aufgehoben und die Darstellung wird zweidimensional. Um möglichst viele Bildpaare für eine korrekte dreidimensionale Darstellung im Raum zu erzeugen, werden für ein Anzeigebild mehrere Ansichten dargestellt. Die Teilbilder dieser verschiedenen Ansichten werden in etwa fächerförmig horizontal abgestrahlt, so dass sich der horizontale Sichtfächer 7 bildet. Bei dem Ausführungsbeispiel wurden insgesamt acht Ansichten a bis h gewählt. Der Öffnungswinkel des Sichtfächers 7 betrug 27°. Es hat sich herausgestellt, dass acht Ansichten bei einem 4 Zoll großem Display besonders bevorzugt sind. In diesem Fall ist die Helligkeit, Auflösung und die räumliche Wiedergabe ausreichend. Die Auflösung des Displays war in diesem Fall größer 150 dpi.

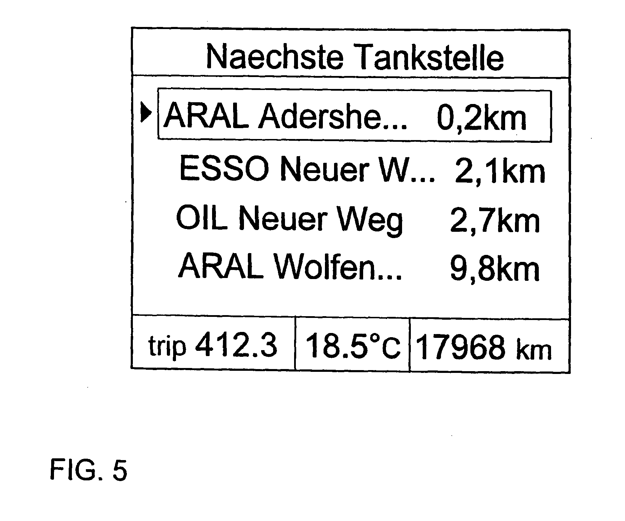

Damit alle Fahrzeuginsassen einen räumlichen Eindruck erhalten, werden insgesamt fünf Sichtfächer 7 nebeneinandergesetzt. Auf diese Weise wird eine Sichtzone gebildet, in welcher Anzeigebilder dreidimensional wiedergegeben werden. Fig. 5 zeigt eine der Ansichten a bis h, welche für ein Anzeigebild eines Menüs von der Anzeigeeinheit 2 wiedergegeben werden.

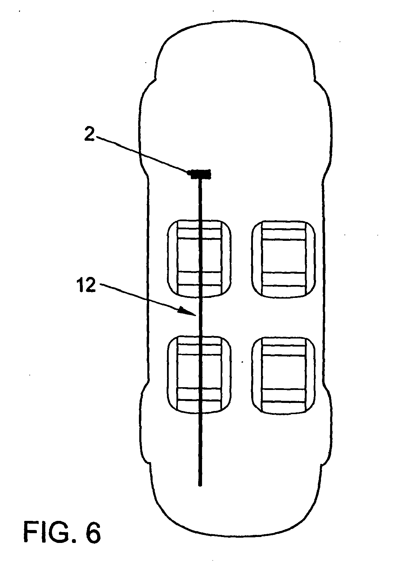

Fig. 6 zeigt ein anderes Beispiel, bei dem die Anzeigeeinheit 2 nur zwei Ansichten abstrahlt. Um in diesem Fall eine dreidimensionale Ansicht des Anzeigebildes über einen Öffnungswinkel von ca. 25° zu gewährleisten, ist die Maske 3 parallel zu dem Display der Anzeigeeinheit 2 bewegbar. Bei der Maske 3 handelt es sich in diesem Fall um eine optische Prismenmaske. Ferner ist bei diesem Ausführungsbeispiel eine mit der Steuereinheit verbundene Einrichtung zum Verfolgen der Augenposition vorgesehen. In Ab-' hängigkeit von der Augenposition wird durch die Steuereinheit 1 und einen geeigneten Antrieb die Maske 3 so verschoben, dass sie der Augenposition folgt. Die zentrale dreidimensionale Sichtlinie ist in Fig. 6 mit 12 bezeichnet.

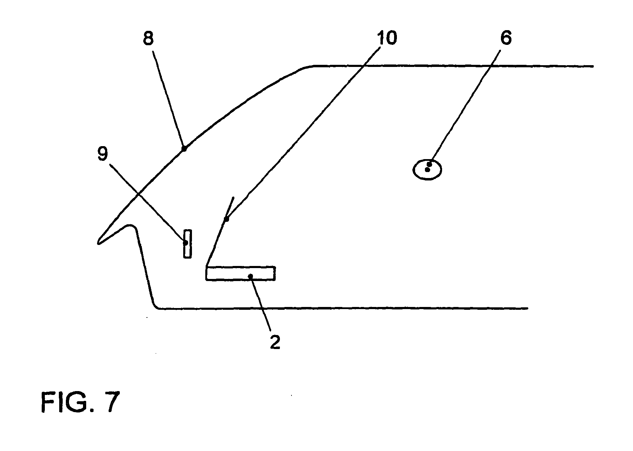

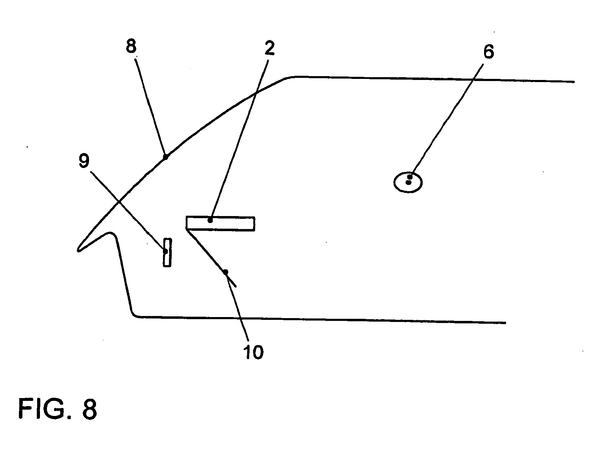

In den Fig. 7 bis 9 sind weitere Ausführungsbeispiele gezeigt. Bei ihnen sehen die Augen 6 des Betrachters das dreidimensionale Anzeigebild der Anzeigeeinheit 2 über einen halbdurchlässigen Spiegel. Der halbdurchlässige Spiegel 10 in den in den Fig. 7 und 8 gezeigten Ausführungsbeispielen ist dabei vor konventionellen Rundinstrumenten 9 angeordnet. Auf diese Weise kann ein dreidimensionales Anzeigebild entweder von unten (Fig. 7) oder von oben (Fig. 8) vor ein herkömmliches Kombiinstrument bzw. deren Rundinstrumente eingespiegelt werden.

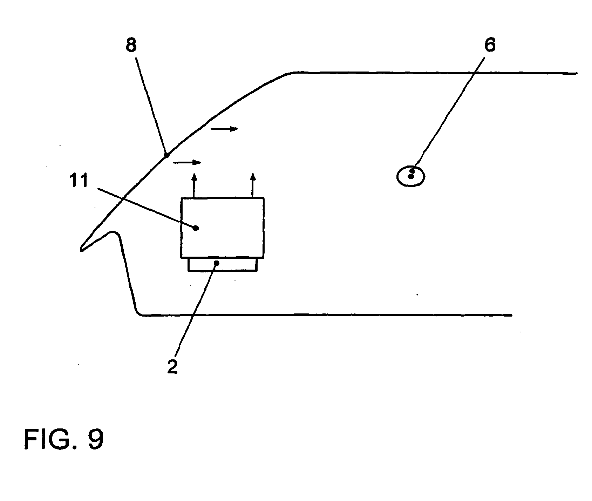

Bei dem in Fig. 9 gezeigten Beispiel wird ein sog. Head-up-Display dadurch realisiert, dass das von der Anzeigeeinheit 2 abgestrahlte Licht über eine Optik 11 zur Verlängerung des optischen Weges auf die Windschutzscheibe 8 geworfen wird, deren Reflektionsvermögen ausreicht, um den Augen 6 des Betrachters das dreidimensionale Anzeigebild in der Windschutzscheibe 8 zu zeigen.

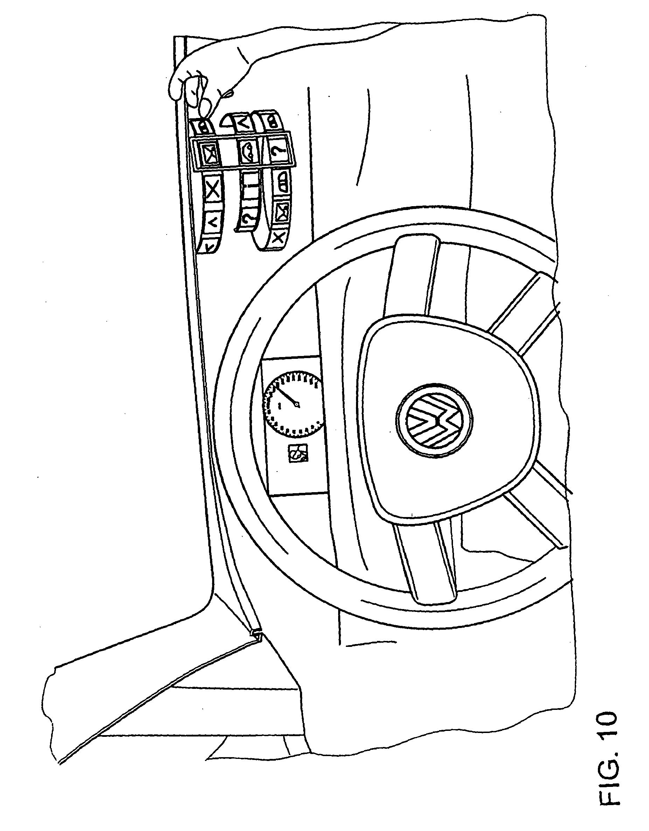

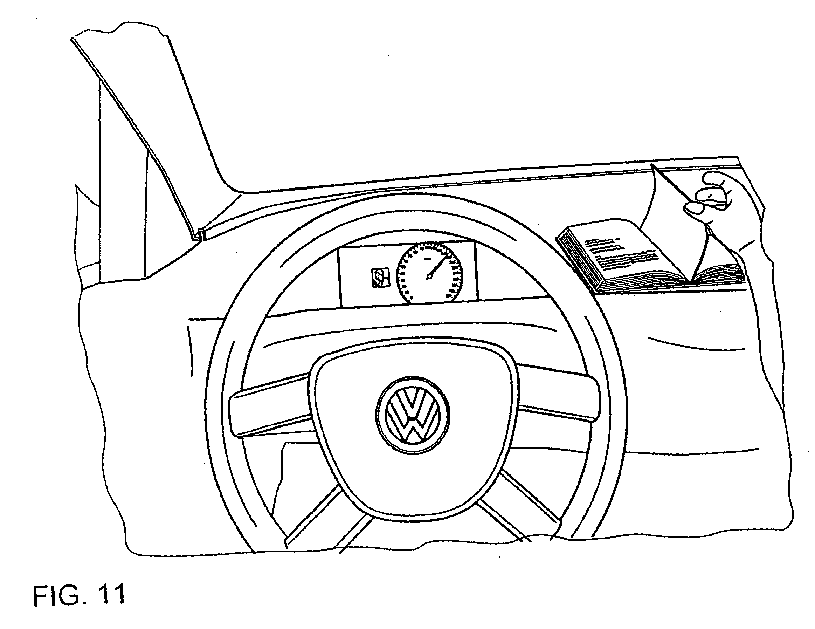

In den Fig. 10 und 11 sind weitere Ausführungsbeispiele gezeigt. Bei dem Beispiel der Fig. 10 befindet sich in der Mittelkonsole eine von der Anzeigeeinheit 2 stereoskopisch dargestellte sich drehende Walze. Wie in Fig. 10 angedeutet, kann die Drehung der Walze durch Gesten gesteuert werden. Hierfür werden die Handbewegungen von Infrarotsensoren aufgenommen und in eine Veränderung des Anzeigebildes umgesetzt. Bei dem in Fig. 11 gezeigten Ausführungsbeispiel wird von der Anzeigeeinheit 2 ein aufgeschlagenes Buch stereoskopisch dargestellt, deren Seiten durch Gestensteuerung umgeblättert werden können.

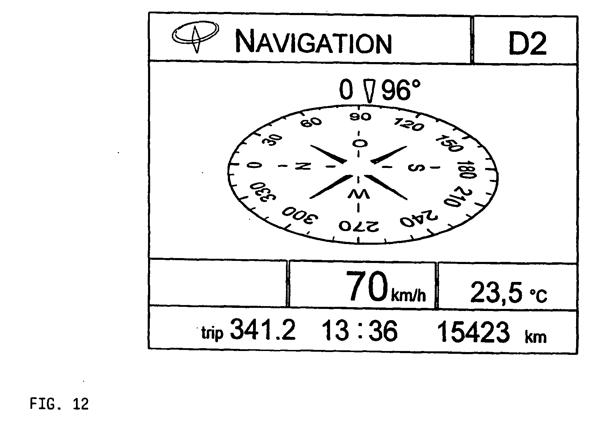

Schließlich ist in Fig. 12 eine Kompassdarstellung des Navigationssystems gezeigt, bei der eine Kompassscheibe schräg von oben betrachtet wird, wobei die Scheibe dreidimensional dargestellt ist. Die dreidimensionale Anzeige des Kompass führt zu einer verbesserten mentalen Übertragung der Darstellung in die Fahrumgebung durch den Fahrer.

### BEZUGSZEICHENLISTE

- 1: Steuereinheit
- 2: Anzeigeeinheit
- 3: Maske
- 4: Fahrzeugbus
- 5: Bedieneinrichtung
- 6: Augen eines Betrachters
- 7: Sichtfächer
- 8: Windschutzscheibe
- 9: Rundinstrument
- 10: halbdurchlässiger Spiegel
- 11: Einrichtung zum Verlängern des optischen Weges
- 12: Sichtlinie für dreidimensionale Betrachtung
- 13: Speichereinheit

## Patentansprüche

1. Kraftfahrzeug mit einem Kombiinstrument zur Darstellung von Informationen nahe des primären Sichtfeldes des Fahrers, umfassend eine Anzeigeeinheit (2) mit einem Display und einer Steuereinheit (1) zum Steuern des Displays, wobei vor dem Display eine Maske (3) angeordnet ist, welche die Lichtemission des von dem Display abgestrahlten Lichts so verändert, dass autostereoskopische Bilder darstellbar sind,
**dadurch gekennzeichnet,**
**dass** das Kraftfahrzeug eine mit der Steuereinheit (1) verbundene dreidimensional betätigbare Bedieneinrichtung (5) umfasst und die Steuereinheit (1) die Anzeigeeinheit (2) so steuert, dass die dreidimensionale Betätigung der Bedieneinrichtung (5) autostereoskopisch wiedergegeben wird.

2. Kraftfahrzeug nach Anspruch 1,
**dadurch gekennzeichnet,**
**dass** die Auflösung des Displays in horizontaler Richtung größer als 150 dpi ist.

3. Kraftfahrzeug nach Anspruch 1 oder 2,
**dadurch gekennzeichnet,**
**dass** die Steuereinheit (1) das Display für die Darstellung eines Anzeigebildes so steuert, dass mindestens acht autostereoskopische Ansichten gleichzeitig darstellbar sind, wobei die Ansichten in einen horizontalen Sichtfächer abstrahlbar sind.

4. Kraftfahrzeug nach Anspruch 3,
**dadurch gekennzeichnet,**
**dass** mehrere stereoskopische Sichtfächer nebeneinander erzeugt werden und eine Sichtzone bilden.

5. Kraftfahrzeug nach Anspruch 3 oder 4,
**dadurch gekennzeichnet,**
**dass** der horizontale Öffnungswinkel des Sichtfächers oder der Sichtfächer, in dem eine autostereoskopische Darstellung erfolgt, größer als 15° ist.

6. Kraftfahrzeug nach Anspruch 5,
**dadurch gekennzeichnet,**
**dass** der horizontale Öffnungswinkel in einem Bereich zwischen 25° und 30° liegt.

7. Kraftfahrzeug nach einem der Ansprüche 1 bis 6,
**dadurch gekennzeichnet,**
**dass** eine mit der Steuereinheit (1) verbundene Einrichtung zum Verfolgen der Augenposition vorgesehen ist, dass die Maske (3) in einer zu dem Display parallelen Ebene verschiebbar ist und dass das Verschieben der Maske (3) in Abhängigkeit von dem Signal der Einrichtung zum Verfolgen der Augenposition erfolgt.

8. Kraftfahrzeug nach einem der Ansprüche 1 bis 7,
**dadurch gekennzeichnet,**
**dass** das Display einen Bereich zur stereoskopischen Darstellung eines Kompass umfasst, bei der eine Kompassscheibe von schräg oben betrachtet wird.

## Claims

1. Motor vehicle with a combination instrument for displaying information near to the primary field of vision of the driver, comprising a display unit (2) with a display and a control unit (1) for controlling the display, wherein a mask (3), which changes the light emission of the light irradiated by the display in such a way that auto-stereoscopic images can be displayed, is arranged in front of the display,
**characterized**
**in that** the motor vehicle comprises an operator control device (5) which can be actuated three-dimensionally and which is connected to the control unit (1) and in that the control unit (1) controls the display unit (2) such that the three-dimensional actuation of the operator control device (5) is represented auto- stereoscopically.

2. Motor vehicle according to Claim 1,
**characterized**
**in that** the resolution of the display in the horizontal direction is greater than 150 dpi.

3. Motor vehicle according to Claim 1 or 2,
**characterized**
**in that** the control unit (1) controls the display for displaying a display image in such a way that at least eight auto-stereoscopic views can be displayed simultaneously, wherein the views can be irradiated into a horizontal fanned-out viewing arrangement.

4. Motor vehicle according to Claim 3,
**characterized**
**in that** a plurality of stereoscopic fanned-out viewing arrangements are generated one next to the other and form a viewing zone.

5. Motor vehicle according to Claim 3 or 4,
**characterized**
**in that** the horizontal angle of aperture of the fanned-out viewing arrangement or arrangements in which an auto-stereoscopic display occurs is greater than 15°.

6. Motor vehicle according to Claim 5,
**characterized**
**in that** the horizontal angle of aperture is in a range between 25° and 30°.

7. Motor vehicle according to one of Claims 1 to 6,
**characterized**
**in that** a device which is connected to the control unit (1) is provided for tracking the position of the eyes, in that the mask (3) can be displaced in a plane parallel to the display, and in that the displacement of the mask (3) takes place as a function of the signal of the device for tracking the position of the eyes.

8. Motor vehicle according to one of Claims 1 to 7,
**characterized**
**in that** the display comprises a region for the stereoscopic display of a compass in which a compass card is viewed obliquely from above.

## Revendications

1. Véhicule automobile doté d'un instrument combiné pour représenter des informations à proximité du champ de vision primaire du conducteur, comprenant une unité d'affichage (2) avec un afficheur et une unité de contrôle (1) pour contrôler l'afficheur, un masque (3) étant disposé devant l'afficheur, lequel modifie l'émission lumineuse de la lumière diffusée par l'afficheur de telle sorte qu'il est possible de représenter des images autostéréoscopiques, **caractérisé en ce que** le véhicule automobile comprend un dispositif de commande (5) à actionnement tridimensionnel qui est relié avec l'unité de contrôle (1) et l'unité de contrôle (1) contrôle l'unité d'affichage (2) de telle sorte que l'actionnement tridimensionnel du dispositif de commande (5) est restitué de manière autostéréoscopique.

2. Véhicule automobile selon la revendication 1, **caractérisé en ce que** la résolution de l'afficheur dans le sens horizontal est supérieure à 150 dpi.

3. Véhicule automobile selon la revendication 1 ou 2, **caractérisé en ce que** l'unité de contrôle (1) contrôle l'afficheur pour la représentation d'une image affichée de telle sorte qu'il est possible de représenter simultanément au moins huit vues autostéréoscopiques, les vues pouvant être projetées dans une fenêtre de vision horizontale.

4. Véhicule automobile selon la revendication 3, **caractérisé en ce que** plusieurs fenêtres de vision stéréoscopique juxtaposées sont générées et forment une zone de vision.

5. Véhicule automobile selon la revendication 3 ou 4, **caractérisé en ce que** l'angle d'ouverture horizontal de la fenêtre de vision ou des fenêtres de vision dans lesquelles a lieu une représentation autostéréoscopique est supérieure à 15°.

6. Véhicule automobile selon la revendication 5, **caractérisé en ce que** l'angle d'ouverture horizontal est compris dans une plage entre 25° et 30°.

7. Véhicule automobile selon l'une des revendications 1 à 6, **caractérisé en ce qu'**il est prévu un dispositif de suivi de la position des yeux relié avec l'unité de contrôle (1), que le masque (3) peut être décalé dans un plan parallèle à l'afficheur et que le décalage du masque (3) s'effectue en fonction du signal du dispositif de suivi de la position des yeux.

8. Véhicule automobile selon l'une des revendications 1 à 7, **caractérisé en ce que** l'afficheur comprend une zone de représentation stéréoscopique d'une boussole avec laquelle un plateau de boussole est observé en biais depuis le haut.
